# EUROPÄISCHE PATENTSCHRIFT

(11) **EP 3 770 567 B1**
(45) Veröffentlichungstag und Bekanntmachung des Hinweises auf die Patenterteilung: **01.09.2021**
(21) Anmeldenummer: 19187704.2
(22) Anmeldetag: 23.07.2019
(51) Int. Cl.: G01J 3/02, G01J 3/10

(54) **OPTOELEKTRONISCHER SENSOR**
OPTOELECTRONIC SENSOR
CAPTEUR OPTOÉLECTRONIQUE

(43) Veröffentlichungstag der Anmeldung: 27.01.2021
(73) Patentinhaber: SICK AG, 79183 Waldkirch (DE)
(72) Erfinder: Eble, Dr. Johannes, 79183 Waldkirch (DE); Opfolter, Matthias, 79211 Denzlingen (DE); Albrecht, Dr. Roland, 79211 Denzlingen (DE)

(56) Entgegenhaltungen:
- EP-A1- 2 929 308
- EP-A2- 0 735 501
- EP-A2- 2 320 214
- DE-B4-102013 202 957
- DE-T2- 60 032 576
- US-A- 4 135 820

## Beschreibung

Die Erfindung betrifft einen optoelektronischen Sensor gemäß dem Oberbegriff des Anspruchs 1, insbesondere einen Farbsensor oder einen Kontrastsensor.

Farbsensoren oder Kontrastsensoren werden beispielsweise in der Automatisierungstechnik eingesetzt, um an einem Objekt angebrachte Kontrastmarken oder Codierungen zu erkennen bzw. auszulesen. Um Kontrastmarken oder Codierungen sicher detektieren zu können, weisen die Sensoren einen Sender auf, der Lichtstrahlen mit verschiedenen Wellenlängen emittiert. Typischerweise werden drei Sendelichtquellen verwendet, die sichtbares Licht in unterschiedlichen Wellenlängenbereichen emittieren, wobei bevorzugt eine Sendelichtquelle rotes Licht, eine Sendelichtquelle blaues Licht und eine Sendelichtquelle grünes Licht emittiert. Die von den Sendelichtquellen emittierten Lichtstrahlen unterschiedlicher Farben werden in einem Optikelement zur Ausbildung eines gemeinsamen Sendelichtstrahls gemischt. Der so erzeugte Sendelichtstrahl wird über einen Strahlteiler und eine strahlformende Optik auf das zu untersuchende Objekt gelenkt. Ein vom Objekt remittierter Empfangslichtstrahl wird wiederum über die strahlformende Optik und den Strahlteiler auf einen Lichtempfänger geleitet, dessen Signale in einer Auswertungseinheit verarbeitet werden.

Ein derartiger Aufbau ist beispielsweise aus der EP 0 735 501 B1 bekannt, wobei das Optikelement zum Mischen der Farben durch eine Spiegeltreppe mit dichroitischen Spiegeln gebildet ist.

Ein weiterer Kontrastsensor ist aus der EP 1 715 313 B1 bekannt. Der Kontrastsensor umfasst einen Lichtsender mit räumlich benachbarten Sendelichtquellen, insbesondere Lichtemissionsdioden zum Aussenden von Sendelicht mehrerer verschiedener Wellenlängenbereiche. Das Optikelement zum Durchmischen verschiedener Farbanteile des Sendelichts ist hier von einem Lichtleiter gebildet.

Aus der DE 198 46 002 A1 ist ein Kontrastsensor zur Erkennung von Marken bekannt. Der Lichtsender ist zum Aussenden von Sendelicht mehrerer verschiedener Testwellenlängenbereiche ausgebildet. Die verschiedenen Farben werden zu einem gemeinsamen Sendestrahl mittels einer Zylinderlinse zusammengeführt beziehungsweise gemischt.

Die genannten Sensoren weisen im Hinblick auf die Optikelemente zur Durchmischung der verschiedenen Farben des Sendelichts jedoch wesentliche Nachteile auf. So hat eine Zylinderoptik einen hohen Platzbedarf und bedingt einen hohen Justageaufwand bei der Produktion. Letzteres gilt ebenfalls bei der Verwendung eines Lichtleiters sowie bei der Ausrichtung der dichroitischen Spiegel einer Spiegeltreppe. Weiterhin bedingt ein zusätzlicher Strahlteiler zum Trennen der Sende- und Empfangsstrahlengänge eine erhöhte Komplexität des optischen Aufbaus des elektrooptischen Sensors.

Aus der DE 60 032 576 T2 ist eine Vorrichtung zur Mischung von Licht von Lampen verschiedener Farben bekannt, die DE 10 2013 202 957 B4 offenbart einen Reflektor zur Verwirklichung von mehreren Lichtfunktionen einer Beleuchtungseinrichtung für ein Kraftfahrzeug.

Die US 4 13 5820 A1 beschreibt ein Spektrophotometer mit einem Reflektor zum Vereinigen von zwei Strahlengängen.

In der EP 2 929 308 A1 wird eine Vorrichtung zur Untersuchung einer Probe offenbart, wobei die Probe mit Licht unterschiedlicher Wellenlängen beleuchtet und von der Probe abgestrahltes Lumineszenzlicht detektiert werden kann. In einer Ausführungsform wird ein pyramidenartiger Reflektor verwendet, um Beleuchtungslichtstrahlen verschiedener Beleuchtungslichtquellen auf parallelen Beleuchtungsstrahlengängen in Richtung der Probe abzulenken

Aus der EP 2 320 214 A2 ist eine Beleuchtungsquellenbaugruppe für die Bohrlochspektroskopie mit einem segmentierten Spiegel bekannt, wobei einzelne Beleuchtungslichtquellen kreisförmig oder ringförmig um den segmentierten Spiegel angeordnet sind, der das Licht der Lichtquellen auf das Ende einer Lichtleitfaser abbildet.

Es ist Aufgabe der vorliegenden Erfindung, einen optoelektronischen Sensor bereitzustellen, der hinsichtlich seines optischen Aufbaus eine verminderte Komplexität gegenüber bekannten Sensoren aufweist.

Diese Aufgabe wird durch einen optoelektronischen Sensor nach Anspruch 1 gelöst. Der erfindungsgemäße Sensor weist dazu wenigstens eine Sendelichtquelle zum Aussenden von Sendelicht auf. Jeder Sendelichtquelle ist ein Sendestrahlengang mit einer optischen Achse zugeordnet auf dem Sendelicht die Sendelichtquelle verlässt.

Der Sensor weist weiterhin wenigstens einen Lichtempfänger zur Detektion von reflektiertem oder remittiertem Sendelicht auf. Reflektiertes oder remittiertes Sendelicht wird auch als Empfangslicht bezeichnet. Jedem Lichtempfänger ist ein Empfangsstrahlengang mit einer optischen Achse zugeordnet, auf dem reflektiertes oder remittiertes Sendelicht zum Lichtempfänger gelangt. Die Sendelichtquellen und Lichtempfänger sind mit einer Steuer- und Auswerteeinheit verbunden.

Zum Vereinigen der Sende- und/oder Empfangsstrahlengänge auf einen gemeinsamen Strahlengang in einem optoelektronischen Sensor wird ein Reflektor vorgeschlagen, welcher eine Vielzahl reflektierender Flächen aufweist. Der gemeinsame Strahlengang weist eine optische Achse auf, die senkrecht auf einer (virtuellen) Reflektorebene steht. Die reflektierenden Flächen des Reflektors weisen eine Neigung zur Reflektorebene auf, wobei jedem Sende- und/oder Empfangsstrahlengang ein vorgegebener Anteil der reflektierenden Flächen des Reflektors derart zugeordnet ist, dass der Reflektor die Sende- und/oder Empfangsstrahlengänge zu einem gemeinsamen Strahlengang vereinigt. Sendelicht, welches entlang der optischen Achse eines Sendestrahlengangs auf den Reflektor fällt, wird an dem Anteil der reflektierenden Flächen entlang der optischen Achse des gemeinsamen Strahlengangs reflektiert, der dem Sendestrahlengang dieses Sendelichts zugeordnet ist. Empfangslicht, welches entlang der optischen Achse des gemeinsamen Strahlengangs auf den Reflektor fällt, wird an dem Anteil der reflektierenden Flächen entlang der optischen Achse des Empfangsstrahlengangs reflektiert, die diesem Empfangsstrahlengang zugeordnet sind.

In einem nicht zur Erfindung gehörigen Beispiel ist der Reflektor zur Vereinigung zweier Strahlengänge ausgelegt, wobei die reflektierenden Flächen beispielsweise eine sägezahn- oder dachkantenartige Struktur bilden. In einer Variante dieses Beispiels werden zwei Sendestrahlengänge vereinigt. In einer weiteren Variante dieses Beispiels werden ein Sende- und ein Empfangsstrahlengang vereinigt. In einer alternativen Variante dieses Beispiels werden zwei Empfangsstrahlengänge vereinigt.

In einer Ausführungsform der Erfindung ist die Neigung der reflektierenden Flächen zur Reflektorebene größer als 0 Grad und kleiner als 45 Grad, bevorzugt größer als 30 Grad und kleiner als 40 Grad.

In einer weiteren Ausführungsform ist ein erster Anteil der reflektierenden Flächen unter einem ersten Winkel zur Reflektorebene geneigt und ein zweiter Anteil der reflektierenden Flächen unter einem vom ersten Winkel verschiedenen zweiten Winkel zur Reflektorebene geneigt.

Die erfindungsgemäße Ausführungsform des Reflektors zum Vereinigen der Sende- und/oder Empfangsstrahlengänge ist zur Vereinigung von drei Strahlengängen ausgelegt. In einer Variante dieser Ausführungsform werden drei Sendestrahlengänge vereinigt. In einer weiteren Variante dieser Ausführungsform werden zwei Sendestrahlengänge und ein Empfangsstrahlengang vereinigt. In einer alternativen Variante dieser Ausführungsform werden ein Sendestrahlengang und zwei Empfangsstrahlengänge vereinigt. Die Ausführungsform kann weiterhin zum Vereinigen von drei Empfangsstrahlengängen verwendet werden.

Bei der Vereinigung von drei Strahlengängen kann vorteilhafterweise eine an einen Retroreflektor angelehnte Tripelstruktur verwendet werden. Dabei sind die reflektierenden Flächen der Tripel anders als bei einem Retroreflektor nicht unter einem Winkel von 90 Grad zueinander angeordnet, sondern unter Winkeln größer als 90 Grad zueinander. Dadurch werden Lichtstrahlen, die in einem definierten Winkel auf den Reflektor fallen, nicht wie bei einem Retroreflektor in die Einfallsrichtung zurück reflektiert, sondern in eine von der Einfallsrichtung abweichende Richtung abgelenkt.

Insbesondere bei der Verwendung eines Reflektors mit Tripelstruktur lassen sich bis zu drei Strahlengänge gleichzeitig auf einen gemeinsamen Strahlengang vereinigen, es ist keine sequentielle Vereinigung nötig, bei der zunächst zwei Strahlengänge vereinigt werden, die erst in einem zweiten Schritt mit einem dritten Strahlengang vereinigt werden.

In einer Ausführung zum Vereinigen von drei Strahlengängen ist die Neigung der reflektierenden Flächen zur Reflektorebene größer als 35,26 Grad und kleiner als 45 Grad, bevorzugt mindestens 37 Grad und höchstens 42 Grad.

In einer Ausführung zum Vereinigen von drei Strahlengängen ist die Neigung eines ersten Anteils der reflektierenden Flächen verschieden zur Neigung eines zweiten Anteils. In einer weiteren alternativen Ausführungsform weisen ein erster Anteil, ein zweiter Anteil und ein dritter Anteil der reflektierenden Flächen unterschiedliche Neigungen zur Reflektorebene auf.

In einer Ausführungsform der Erfindung ist der optoelektronische Sensor bevorzugt ein Kontrastsensor zur Detektion beziehungsweise Auswertung von Marken oder ein Farbsensor zur Detektion von Farben, es sind aber auch weitere optoelektronische Sensoren, insbesondere Autokollimationssysteme denkbar, in denen eine effektive Vereinigung von Sende- und/oder Empfangsstrahlengängen vorteilhaft ist, beispielsweise Laserscanner zur Detektion von Objekten oder Sicherheitslaserscanner zur Absicherung von Gefahrenbereichen.

In einer weiteren Ausführungsform der Erfindung sind zwei Reflektoren zum Vereinigen der Sende- und/oder Empfangsstrahlengänge vorgesehen, so dass insgesamt 5 Sende- und/oder Empfangsstrahlengänge vereinigt werden können.

Der Sensor kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektonischen Sensors mit einer Strahlteilertreppe gemäß dem Stand der Technik;
- Fig. 2: eine schematische Darstellung eines Beispiels eines Sensors mit einem Reflektor zur Vereinigung von zwei Sendestrahlengängen;
- Fig. 3: eine schematische Ansicht eines Reflektors zum Vereinigen von Sende- und/oder Empfangsstrahlengängen gemäß des Beispiels aus Figur 2;
- Fig. 4: einen Schnitt durch einen Teil des Reflektors aus Figur 3;
- Fig. 5: eine schematische Darstellung eines Beispiels eines Sensors mit einem Reflektor zur Vereinigung eines Sendestrahlengangs mit einem Empfangsstrahlengang;
- Fig. 6: eine schematische Darstellung einer Ausführungsform eines erfindungsgemäßen Sensors mit einem Reflektor zur Vereinigung von drei Sendestrahlengängen;
- Fig. 7: eine schematische Ansicht eines Reflektors zum Vereinigen von Sendeund/oder Empfangsstrahlengängen gemäß der Ausführungsform der Erfindung aus Figur 6;
- Fig. 8: einen Ausschnitt des Reflektors aus Figur 7;
- Fig. 9: einen Schnitt durch Figur 8;
- Fig. 10: eine schematische Darstellung einer Ausführungsform eines erfindungsgemäßen Sensors mit einem Reflektor zur Vereinigung von zwei Sendestrahlengängen und einem Empfangsstrahlengang;
- Fig. 11: eine schematische Darstellung einer weiteren Ausführungsform eines erfindungsgemäßen Sensors mit einem Reflektor zur Vereinigung von einem Sendestrahlengang und zwei Empfangsstrahlengängen
- Fig. 12: eine schematische Darstellung eines TIR-Moduls als Reflektor zum Vereinigen der Sende- und/oder Empfangsstrahlengänge
- Fig. 13: einen Schnitt durch Figur 12;
- Fig. 14: eine schematische Darstellung einer Ausführungsform eines Sensors mit zwei Reflektoren zur Vereinigung von drei Sende- und zwei Empfangsstrahlengängen;
- Fig. 15: eine schematische Darstellung einer weiteren Ausführungsform eines erfindungsgemäßen Sensors mit einem Reflektor zur Vereinigung von drei Sendestrahlengängen und mit separater Sende- und Empfangsoptik;
- Fig. 16: eine schematische perspektivische Darstellung einer Anordnung von einem Reflektor zur Vereinigung von drei Sendestrahlengängen mit drei Sendelichtquellen sowie Parabolspiegeln zur Strahlformung der Sendelichtstrahlenbündel;

In allen Figuren bezeichnen gleiche Bezugszahlen entsprechende Bauelemente.

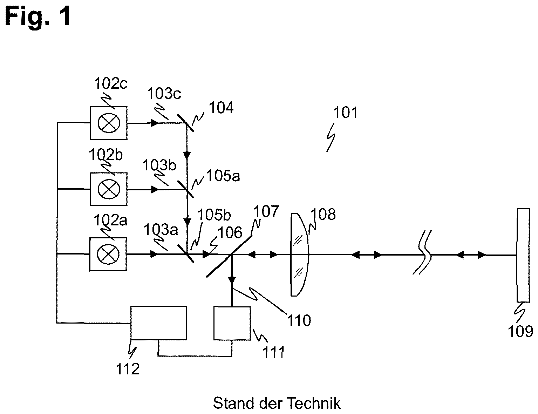

Figur 1 zeigt einen als Kontrasttaster ausgebildeten optoelektronischen Sensor 101 zum Erkennen oder Auslesen von Kontrastmarken oder Codierungen nach dem Stand der Technik. Sendelichtquellen 102a, 102b, 102c emittieren Sendelicht entlang Sendestrahlengängen 103a, 103b, 103c, welches mittels eines Spiegels 104 und zweier dichroitischer Spiegel 105a, 105b zu in einem gemeinsamen Strahlengang 106 vereinigt und durch einen Strahlteiler 107 und eine strahlformende Optik 108 auf ein Objekt 109 geleitet wird. Vom Objekt 109 reflektiertes oder remittiertes Licht gelangt als Empfangslicht zurück zum Sensor 101 und wird mittels der strahlformenden Optik 108 und des Strahlteilers 107 über einen Empfangsstrahlengang 110 auf einen Lichtempfänger 111 abgebildet. Die Sendelichtquellen 102a, 102b, 102c und der Lichtempfänger 111 sind mit einer Steuerungs- und Auswerteeinheit 112 verbunden.

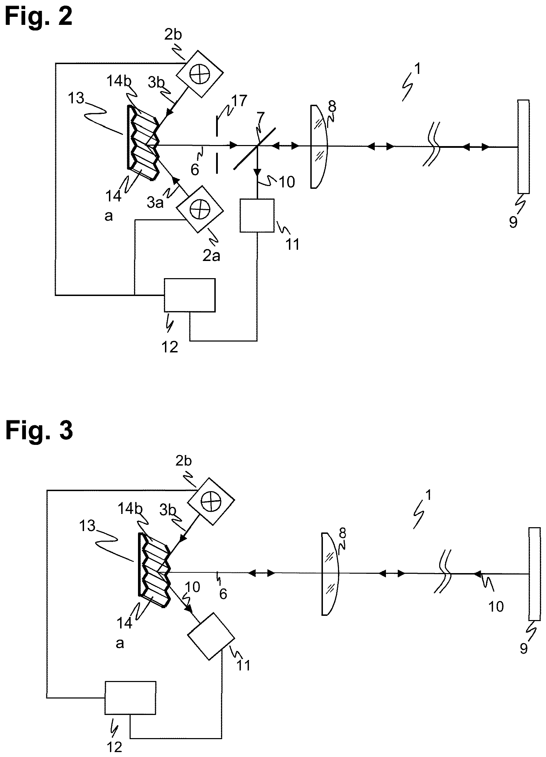

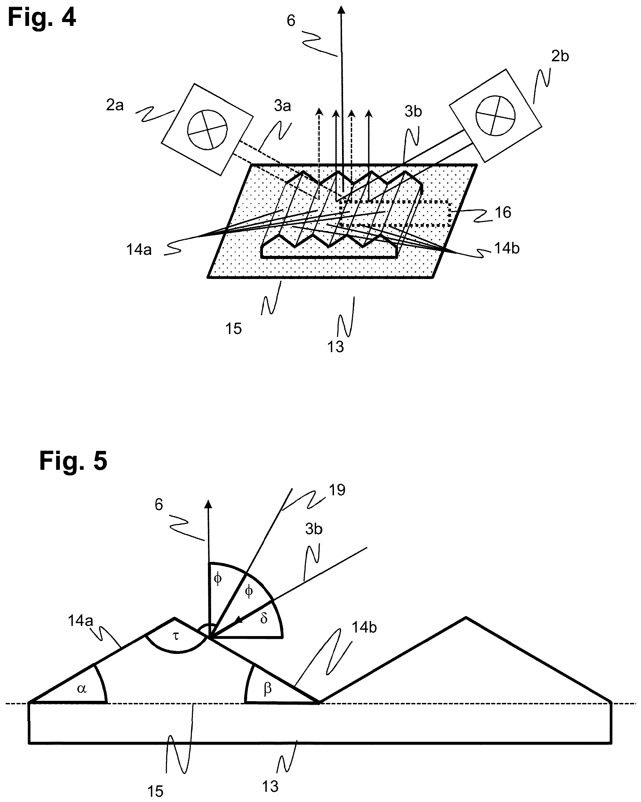

In Figur 2 ist ein nicht zur Erfindung gehöriger optoelektronischer Sensor 1 gezeigt, der beispielsweise als Kontrasttaster zum Erkennen oder Auslesen von Kontrastmarken oder Codierungen oder als Farbsensor zur Detektion von Farben ausgebildet ist. Sendelichtquellen 2a und 2b emittieren Sendelicht in Sendestrahlengänge 3a und 3b, welche mit einem Reflektor 13 zum Vereinigen von Sendestrahlengängen zu einem gemeinsamen Strahlengang 6 vereinigt werden. Die Funktionsweise des Reflektors 13 wird unter Bezugnahme auf die Figuren 4 und 5 näher erläutert. Der Reflektor 13 ersetzt praktisch die in Figur 1 gezeigten herkömmlichen Spiegel 104, 105a, 105b. Im gemeinsamen Strahlengang 6 kann in Lichtausbreitungsrichtung nach dem Reflektor 13 eine Blende 17 zur Begrenzung des Durchmessers des gemeinsamen Strahlengangs 6 vorgesehen sein. Zusätzlich kann im Bereich der Blende ein Diffusor (nicht gezeigt) angeordnet sein, um die Vermischung der Sendelichtstrahlenbündel zu verbessern. Durch einen Strahlteiler 7 und eine strahlformende Optik 8 wird das Sendelicht auf ein Objekt 9 geleitet. Vom Objekt 9 reflektiertes oder remittiertes Licht gelangt als Empfangslicht zurück zum Sensor 1 und wird mittels der strahlformenden Optik 8 und dem Strahlteiler 7 über einen Empfangsstrahlengang 10 auf einen Lichtempfänger 11 abgebildet und vom Lichtempfänger 11 detektiert. Die Sendelichtquellen 2a und 2b und der Lichtempfänger 11 sind mit einer Steuerungs- und Auswerteeinheit 12 verbunden. Die Steuerungs- und Auswerteeinheit 12 enthält üblicherweise eine Steuerelektronik zur Steuerung der Sendelichtquellen und Lichtempfänger, sowie einen oder mehrere Mikroprozessoren zur Auswertung von Empfangssignalen der Lichtempfänger und zur Erzeugung von Schaltsignalen abhängig vom detektierten Empfangslicht.

In Figur 3 ist ein weiterer, nicht zur Erfindung gehöriger optoelektronischer Sensor 1 gezeigt, wobei im Unterschied zu dem in Figur 2 gezeigten Sensor ein Sendestrahlengang und ein Empfangsstrahlengang durch einen Reflektor vereinigt werden. In diesem Falle kann es sich um eine einfache, kostengünstige Ausführung eines Sensors mit lediglich einer Lichtquelle handeln.
Sendelicht aus der Sendelichtquelle 2b gelangt über den Sendestrahlengang 3b zum Reflektor 13 und wird über die reflektierenden Flächen 14b des Reflektors 13, einen gemeinsamen Strahlengang 6 und eine strahlformende Optik 8 auf ein Objekt 9 geleitet. Vom Objekt 9 reflektiertes oder remittiertes Licht gelangt als Empfangslicht zurück zum Sensor 1 und über die strahlformende Optik 8 und den gemeinsamen Strahlengang 6 zum Reflektor 13. Der auf die reflektierenden Flächen 14a des Reflektors 13 fallende Teil des Empfangslichts wird über den Empfangsstrahlengang 10 auf einen Lichtempfänger 11 abgebildet. Die Sendelichtquelle 2b und der Lichtempfänger 11 sind mit einer Steuerungs- und Auswerteeinheit 12 verbunden.
Der Reflektor 13 dient also in diesem Fall zum Vereinigen eines Sendestrahlengangs 3b und eines Empfangsstrahlengangs 10 zu einem gemeinsamen Strahlengang 6.

Figur 4 zeigt einen Reflektor 13 zum Vereinigen von Sende- und/oder Empfangsstrahlengänge, wie er in den in Figur 2 und Figur 3 gezeigten Ausführungen verwendet wird. Der Reflektor 13 weist eine Vielzahl von reflektierenden Flächen 14 auf, aufgeteilt in einen Anteil von ersten reflektierenden Flächen 14a und einen Anteil von zweiten reflektierenden Flächen 14b. Die ersten reflektierenden Flächen 14a und zweiten reflektierenden Flächen 14b reflektieren Sendelicht, das von den Sendelichtquellen 2a, 2b entlang der Sendestrahlengänge 3a, 3b emittiert wird, in einen gemeinsamen Strahlengang 6. Dazu sind die ersten Flächen 14a parallel und alternierend zu den zweiten Flächen 14b angeordnet und bilden so gemeinsam eine sägezahn- oder dachkantenartige Struktur. Der Abstand der Spitzen, an denen die reflektierenden Flächen aneinanderstoßen, den man auch als Rastermaß des Reflektors 13 bezeichnet, beträgt vorzugsweise 5µm - 500µm, besonders bevorzugt 20µm - 200µm.

Die reflektierenden Flächen 14a, 14b, Sendelichtquellen 2a, 2b und Sendestrahlengänge 3a, 3b sind so angeordnet, dass erstes Sendelicht aus der ersten Sendelichtquelle 2a entlang des ersten Sendestrahlengangs 3a nur auf die ersten reflektierenden Flächen 14a auftrifft und von den ersten reflektierenden Flächen 14a als eine Vielzahl voneinander beabstandeter, erster Teilstrahlen entlang eines gemeinsamen Strahlengangs 6 abgelenkt wird, und dass zweites Sendelicht aus der zweiten Sendelichtquelle 2a entlang des zweiten Sendestrahlengangs 3b nur auf die zweiten Flächen 14b auftrifft und von den zweiten reflektierenden Flächen 14b als eine Vielzahl voneinander beabstandeter, zweiter Teilstrahlen entlang des gemeinsamen Strahlengangs 6 abgelenkt wird. Die ersten Teilstrahlen alternieren mit den zweiten Teilstrahlen, und sämtliche Teilstrahlen sind zueinander parallel, sofern das eingestrahlte Sendelicht aus den Sendelichtquellen 2a, 2b kollimiert ist, also ebenfalls parallele Strahlen aufweist. Das Sendelicht aus den Sendelichtquellen 2a, 2b muss jedoch nicht kollimiert sein, sondern kann auch als divergentes oder konvergentes Strahlenbündel auf den Reflektor 13 treffen. Damit das Sendelicht aus den Sendelichtquellen 2a, 2b entlang des gemeinsamen Strahlengangs 6 abgelenkt wird, sollten vorzugsweise bestimmte geometrischen Bedingungen erfüllt sein.

Figur 5 zeigt einen Schnitt durch den Reflektor 13 entlang der Schnittlinie 16 aus Figur 2. Eine (virtuelle) Reflektorebene 15 steht senkrecht zur optischen Achse des gemeinsamen Strahlengangs 6. Die erste reflektierende Fläche 14a ist im Winkel α und die zweite reflektierende Fläche 14b im Winkel β zur Reflektorebene 15 geneigt, so dass sich für den Winkel τ, den die beiden Flächen 14a und 14b einschließen, die
Beziehung τ = 180°-α-β ergibt. Sendelicht, hier exemplarisch Sendelicht aus Sendelichtquelle 2b, fällt entlang des Sendestrahlengangs 3b so unter einem Einstrahlwinkel δ zur Reflektorebene 15 auf die zweite reflektierende Fläche 14b, dass es entlang des gemeinsamen Strahlengangs 6 reflektiert wird. φ ist der Einfalls- bzw. Ausfallswinkel des Sendelichts in Bezug zur Senkrechten 19 zu der zweiten reflektierenden Fläche 14b.

Der bevorzugte Wertebereich für die Winkel α und β ist durch folgende Randbedingungen gegeben:
- δ>=0°, da das Licht von oben auf die reflektierende Flächen 14a, 14b fällt, daraus folgt, α und β < 45°,
- δ<=α, da bei größerem Einfallswinkel δ auch die zur Lichtquelle 2a gehörigen reflektierenden Flächen 14a beleuchtet würden.
   Für die Beziehung zwischen α für β
- β=φ, da der gemeinsame Strahlengang 6 senkrecht zur Reflektorebene 15 steht.
- δ=90°-2φ, da Einfalls- gleich Ausfallswinkel und der Sendelichtstahl senkrecht zur Reflektorebene 15 reflektiert wird.
Aus diesen Randbedingungen folgt für einen vorgegebenen Neigungswinkel α für β die Beziehung β = (90°-α) /2.

Sind α und β gleich groß, so ist die Überlappungsfläche der ersten und zweiten reflektierenden Flächen 14a, 14b mit dem gemeinsamen Strahlengang 6 gleich groß. Durch geeignete Wahl von α und β lässt sich die Überlappungsfläche der ersten und zweiten reflektierenden Flächen 14a und 14b mit dem gemeinsamen Strahlengang 6 variieren. Dies kann insbesondere dann von Interesse sein, wenn der Reflektor 13 zum Vereinigen eines Sendelichtstrahls mit einem Empfangslichtstrahl verwendet werden soll wie in dem Beispiel in Figur 3 gezeigt.

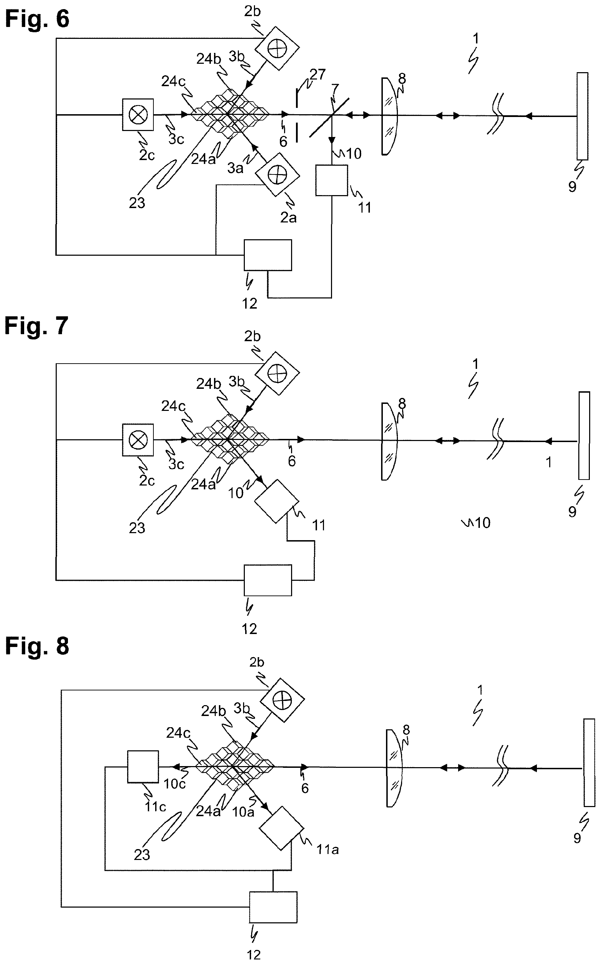

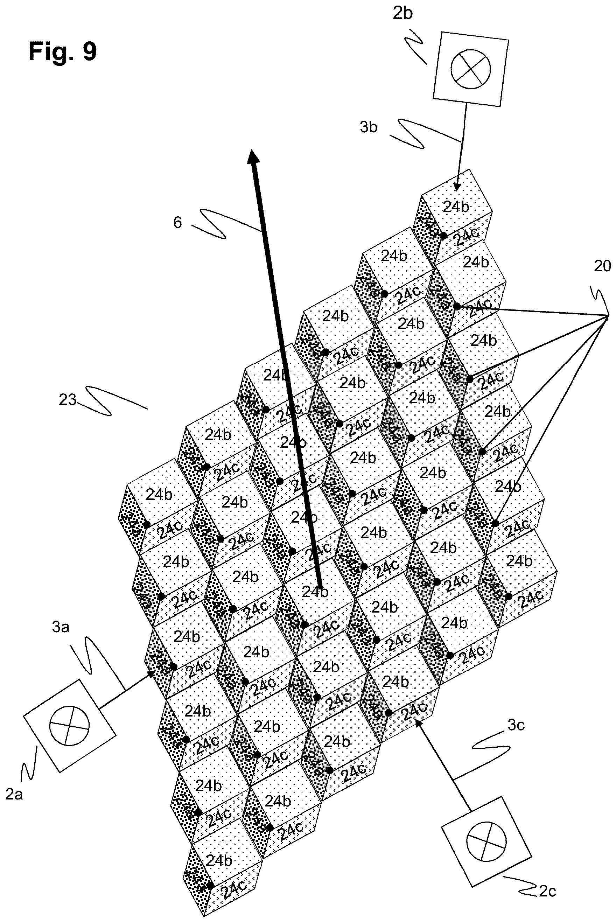

In einem alternativen Beispiel können α und β so gewählt werden, dass Sendelicht über diejenigen der ersten oder zweiten reflektierenden Flächen 14a, 14b in den Strahlengang eingekoppelt werden, die mit dem gemeinsamen Strahlengang 6 die kleinere Überlappungsfläche bilden. Das Empfangslicht wird dann über die ersten oder zweiten reflektierenden Flächen 14a, 14b, die mit dem gemeinsamen Strahlengang 6 die größere Überlappungsfläche bilden, auf den Lichtempfänger 11 gelenkt. Somit kann mit dieser Anordnung eine höhere Lichtausbeute für den Lichtempfänger 11 realisiert werden als z. B. mit einem herkömmlichen 50/50 Strahlteiler.
Durch den schrägen Einfall des Sendelichts auf den Reflektor 13 hätte ein Sendlichtstrahl, der mit einem kreisförmigen Strahlquerschnitt aus den Sendelichtquellen 2a, 2b austritt, nach Reflexion am Reflektor 13 einen ovalen Querschnitt. Falls nach dem Reflektor 13 ein kreisförmiger Strahlquerschnitt gewollt ist, können die Querschnitte der Sendlichtstrahlen vor der Reflexion am Reflektor 13 elliptisch geformt werden, beispielsweise durch eine anamorphotische Optik, wobei der Grad der Elliptizität abhängig vom Einstrahlwinkel δ ist.
Die folgenden Figuren 6-8 zeigen nun erfindungsgemäße Ausführungsformen, in denen im Unterschied zu den vorherigen Ausführungsformen drei Strahlengänge durch einen Reflektor zu einem gemeinsamen Strahlengang vereinigt werden
In Figur 6 ist ein optoelektronischer Sensor 1 gemäß einer Ausführungsform der Erfindung gezeigt. Sendelichtquellen 2a, 2b und 2c emittieren Sendelicht in Sendestrahlengänge 3a, 3b und 3c, welche mit einem Reflektor 23 zum Vereinigen von Sendestrahlengängen zu einem gemeinsamen Strahlengang 6 vereinigt werden. Die Funktionsweise des Reflektors 23 wird unter Bezugnahme auf die Figuren 9-11 näher erläutert. Im gemeinsamen Strahlengang 6 kann in Lichtausbreitungsrichtung nach dem Reflektor 23 eine Blende 27 zur Begrenzung des Durchmessers des gemeinsamen Strahlengangs 6 vorgesehen sein. Zusätzlich kann im Bereich der Blende ein Diffusor (nicht gezeigt) angeordnet sein, um die Vermischung der Sendelichtstrahlenbündel zu verbessern. Durch einen Strahlteiler 7 und eine strahlformende Optik 8 wird das Sendelicht auf ein Objekt 9 geleitet. Vom Objekt 9 reflektiertes oder remittiertes Licht gelangt als Empfangslicht zurück zum Sensor 1 und wird mittels der strahlformenden Optik 8 und dem Strahlteiler 7 über einen Empfangsstrahlengang 10 auf einen Lichtempfänger 11 abgebildet. Die Sendelichtquellen 2a, 2b und 2c und der Lichtempfänger 11 sind mit einer Steuerungs- und Auswerteeinheit 12 verbunden. Die Steuerungs- und Auswerteeinheit 12 enthält üblicherweise eine Steuerelektronik zur Steuerung der Sendelichtquellen und Lichtempfänger, sowie einen oder mehrere Mikroprozessoren zur Auswertung von Empfangssignalen der Lichtempfänger und zur Erzeugung von Schaltsignalen abhängig vom detektierten Empfangslicht.

In Figur 7 ist ein optoelektronischer Sensor 1 gemäß einer weiteren Ausführungsform der Erfindung gezeigt, wobei im Unterschied zu dem in Figur 6 gezeigten Sensor zwei Sendestrahlengänge und ein Empfangsstrahlengang zu einem gemeinsamen Strahlengang vereinigt werden. Sendelicht aus den Sendelichtquellen 2b und 2c gelangt über die Sendestrahlengänge 3b, 3c zum Reflektor 23 und wird über die reflektierenden Flächen 24b und 24c des Reflektors 23, einen gemeinsamen Strahlengang 6 und durch eine strahlformende Optik 8 auf ein Objekt 9 geleitet. Vom Objekt 9 reflektiertes oder remittiertes Licht gelangt als Empfangslicht zurück zum Sensor 1 und über die strahlformende Optik 8 und den gemeinsamen Strahlengang 6 zum Reflektor 23. Der auf die reflektierenden Flächen 24a des Reflektors 23 fallende Teil des Empfangslichts wird über den Empfangsstrahlengang 10 auf einen Lichtempfänger 11 abgebildet. Die Sendelichtquellen 2b und 2c und der Lichtempfänger 11 sind mit einer Steuerungs- und Auswerteeinheit 12 verbunden. Der Reflektor 23 dient also in diesem Fall zum Vereinigen zweier Sendestrahlengänge 3b, 3c und eines Empfangsstrahlengangs 10 zu einem gemeinsamen Strahlengang 6.

In Figur 8 ist ein optoelektronischer Sensor 1 gemäß einer weiteren Ausführungsform der Erfindung gezeigt, wobei im Unterschied zu den in Figur 6 und Figur 7 gezeigten Sensoren ein Sendestrahlengang und zwei Empfangsstrahlengänge zu einem gemeinsamen Strahlengang vereinigt werden. Sendelicht aus der Sendelichtquelle 2b gelangt über den Sendestrahlengang 3b zum Reflektor 23 und wird über die reflektierenden Flächen 14b des Reflektors 13, einen gemeinsamen Strahlengang 6 und eine strahlformende Optik 8 auf ein Objekt 9 geleitet. Vom Objekt 9 reflektiertes oder remittiertes Licht gelangt als Empfangslicht zurück zum Sensor 1 und über die strahlformende Optik 8 und den gemeinsamen Strahlengang 6 zum Reflektor 23. Der auf die reflektierenden Flächen 24a und 24c fallende Teil des Empfangslichts wird über die Empfangsstrahlengänge 10a, 10c auf die Lichtempfänger 11a, 11c abgebildet. Die Sendelichtquelle 2b und die Lichtempfänger 11a, 11c sind mit einer Steuerungs- und Auswerteeinheit 12 verbunden.

In Figur 9 ist ein Reflektor 23 zum Vereinigen von Sende- und/oder Empfangsstrahlengängen gemäß der Ausführungsformen aus den Figuren 6-8 gezeigt. Der Reflektor 23 weist eine Vielzahl von reflektierenden Flächen 24a, 24b, 24c auf, aufgeteilt in einen Anteil von ersten reflektierenden Flächen 24a, zweiten reflektierenden Flächen 24b und dritten reflektierenden Flächen 24c.

Die Anordnung der reflektierenden Flächen 24a, 24b, 24c lehnt sich dabei an einen Retroreflektor an. Ein Retroreflektor basiert in einer häufig eingesetzten Ausprägung auf drei rechtwinklig zueinander ausgerichteten reflektierenden Flächen, die auch als Tripel bezeichnet werden. Die geometrische Anordnung entspricht dabei einem hohlen Würfeleck mit innen verspiegelten Wänden, wobei in der Regel eine Vielzahl von Würfelecken als Tripelarray verendet wird. Dadurch wird Licht, welches auf den Retroreflektor fällt, nach mehrfacher Reflexion an den verspiegelten Wänden in die Einfallsrichtung zurück gespiegelt.

Im Gegensatz zu einem Retroreflektor sind die einzelnen Tripel in der in Figur 9 illustrierten Ausführungsform jedoch nicht als hohle Würfelecken mit quadratischen, rechtwinklig zueinanderstehenden Wänden ausgeführt. Die Wände der Tripel werden vielmehr durch die ersten reflektierenden Flächen 24a, zweiten reflektierenden Flächen 24b und dritten reflektierenden Flächen 24c gebildet, welche die Form von Parallelogrammen aufweisen und in einer (virtuellen) Reflektorebene 19 angeordnet sind, die senkrecht zur optischen Achse des Sendelichtstrahls 6 steht. Die reflektierenden Flächen 24a, 24b und 24 c sind zu der Reflektorebene 19 (nicht gezeigt) jeweils um einen Winkel α, β und γ geneigt und zueinander unter Winkeln größer 90 Grad angeordnet. Die Spitzen der Tripel, welche aus der Ebene herausragen, sind in der Zeichnung durch schwarze Punkte 20 gekennzeichnet. Durch die beschriebene Anordnung der reflektierenden Flächen 24a, 24b, 24c werden Lichtstrahlen, die in einem definierten Winkel auf den Reflektor 23 fallen, nicht in die jeweilige Einfallsrichtung zurück reflektiert, sondern gemäß Einfalls- gleich Ausfallswinkel abgelenkt.

Der Abstand der Tripelspitzen 20, an denen die reflektierenden Flächen der Tripel aneinanderstoßen und den man auch als Rastermaß des Reflektors 23 bezeichnet, beträgt vorzugsweise 5µm - 500µm, besonders bevorzugt 20µm - 200µm und ist dadurch wesentlich kleiner als die Durchmesser der Sendelichtstrahlenbündel. Dadurch lässt sich bei der Verwendung des Reflektors 23 Licht verschiedener Wellenlängen effektiv mischen, so dass beispielsweise die Überlagerung je einer rotes, grünes und blaues Licht emittierenden Sendelichtquelle auf dem beleuchteten Objekt 9 weißes Licht erzeugt.

Die reflektierenden Flächen 24a, 24b, 24c, Sendelichtquellen 2a, 2b, 2c und Sendestrahlengänge 3a, 3b, 3c sind so angeordnet, dass erstes Sendelicht aus der ersten Sendelichtquelle 2a entlang des ersten Sendestrahlengangs 3a nur auf die ersten reflektierenden Flächen 24a auftrifft und von den ersten reflektierenden Flächen 24a als eine Vielzahl voneinander beabstandeter, erster Teilstrahlen entlang eines gemeinsamen Strahlengangs 6 abgelenkt wird, dass zweites Sendelicht aus der zweiten Sendelichtquelle 2b entlang des zweiten Sendestrahlengangs 3b nur auf die zweiten reflektierenden Flächen 24b auftrifft und von den zweiten reflektierenden Flächen 24b als eine Vielzahl voneinander beabstandeter, zweiter Teilstrahlen entlang des gemeinsamen Strahlengangs 6 abgelenkt wird und dass drittes Sendelicht aus der dritten Sendelichtquelle 3c entlang des dritten Sendestrahlengangs 3c nur auf die dritten reflektierenden Flächen 24c auftrifft und von den dritten reflektierenden Flächen 24c als eine Vielzahl voneinander beabstandeter, dritter Teilstrahlen entlang des gemeinsamen Strahlengangs 6 abgelenkt wird. Die ersten, zweiten und dritten Teilstrahlen bilden somit ein Gitter von Teilstrahlen.

Sämtliche Teilstrahlen sind zueinander parallel, sofern das eingestrahlte Sendelicht aus den Sendelichtquellen 2a, 2b, 2c kollimiert ist, also ebenfalls zueinander parallele Strahlen aufweist. Das Sendelicht aus den Sendelichtquellen 2a, 2b, 2c muss jedoch nicht kollimiert sein, sondern kann auch als divergentes oder konvergentes Strahlenbündel auf den Reflektor 23 treffen.

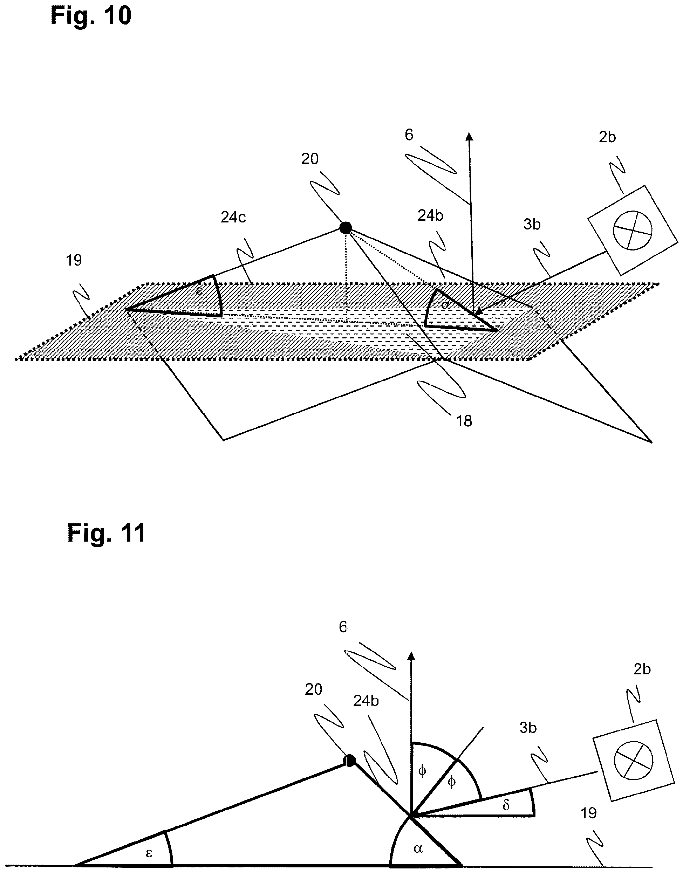

Damit das Sendelicht aus den Sendelichtquellen 2a, 2b, 2c ohne geometrische Verluste wie beispielsweise Reflexion in eine von dem Strahlengang 6 abweichende Richtung reflektiert wird, sollten vorzugsweise bestimmte geometrischen Bedingungen erfüllt sein, die nun unter Bezugnahme auf die Figuren 10 und 11 erläutert werden, wobei stellvertretend für alle Sende- und/oder Empfangsstrahlengänge der Sendestrahlengang 3b betrachtet wird.

In Figur 10 schneidet die (virtuelle) Reflektorebene 19, die senkrecht zur optischen Achse des gemeinsamen Strahlengangs 6 steht, ein Tripel des Reflektors 23. Der resultierende Körper ist ein Tetraeder mit einem gleichseitigen Dreieck als Grundfläche 18. Beispielhaft ist hier gezeigt, wie Sendelicht der Sendelichtquelle 2b entlang des Sendestrahlengangs 3b auf eine reflektierende Fläche 24b des Reflektors 23 fällt, welche unter einem Winkel α zur Reflektorebene 19 geneigt ist. Das Sendelicht wird in Richtung des gemeinsamen Strahlengangs 6 reflektiert.

Figur 11 zeigt einen Schnitt durch den Tetraeder, der entlang einer Mittelsenkrechten der Grundfläche 18 und durch die Spitze 20 des Tetraeders verläuft. Da die Grundfläche des Tetraeders durch ein gleichseitiges Dreieck gebildet wird, gilt folgende Beziehung:
- tan *α* = 2 tan *ε*;
Der bevorzugte Wertebereich für den Neigungswinkel α ist außerdem durch folgende Randbedingungen gegeben:
- δ >= 0°, da das Licht von oben auf die zweite reflektierende Fläche 24b fällt; daraus folgt α < 45°;
- δ <= ε, da bei größerem Einfallswinkel auch die zu den jeweils anderen Sendelichtquellen 2a, 2c gehörigen reflektierenden Flächen 24a und 24c beleuchtet würden;
- δ = 90° - 2φ, da Einfalls- gleich Ausfallswinkel und die optische Achse des gemeinsamen Strahlengangs 6 senkrecht zur Reflektorebene 19 steht,
- α = φ, da die optische Achse des gemeinsamen Strahlengangs 6 senkrecht zur Reflektorebene 19 steht,
   Daraus folgt für den bevorzugten Wertebereich des Neigungswinkels α der Fläche 24b zur Reflektorebene 19
- 35,26 °≤ α < 45°;
   und für den bevorzugten Wertebereich des Einfallswinkels δ des Sendelichts 3b zur Reflektorebene 19
- 0 < δ ≤ 19,47°;
Die Bedingungen gelten analog für die ersten und dritten reflektierenden Flächen 24a, 24c des Reflektors 23.

Unter Berücksichtigung von Toleranzen und der Strahldivergenz kann bevorzugt ein Winkelpaar δ=14° und α=38° gewählt werden. Damit wirkt der Reflektor 23 auch für nicht-parallele Strahlen von δ=14°±5° als effizienter Strahlvereiniger.

Die Einfallswinkel δ der Sende- und/oder Empfangsstrahlengänge auf den Reflektor in Bezug auf die Reflektorebene sind daher vorzugsweise kleiner als 45 Grad, bevorzugt kleiner als 20 Grad.

Der Neigungswinkel kann für die ersten bis dritten reflektierenden Flächen 24a, 24b, 24c gleich gewählt werden, aber auch individuell, also ein Winkel α für alle zweiten reflektierenden Flächen 24b, ein Winkel β für alle ersten reflektierenden Flächen 24a und ein Winkel γ für alle dritten reflektierenden Flächen 24c, wobei vorzugsweise der oben angegebene Wertebereich für alle Winkel einzuhalten ist:
- 35,26° ≤ α, β, γ < 45°.

Sind α, β und γ gleich groß, so ist die Überlappungsfläche der reflektierenden Flächen 24a, 24b, 24c mit dem gemeinsamen Strahlengang 6 gleich groß. Durch geeignete Wahl von α, β und γ lässt sich die Überlappungsfläche der reflektierenden Flächen 24a, 24b, 24c mit dem gemeinsamen Strahlengang 6 variieren. Dies kann insbesondere dann von Interesse sein, wenn der Reflektor 23 wie in der Figur 8 gezeigt, zum Vereinigen eines Sendestrahlengangs mit zwei Empfangsstrahlengängen verwendet werden soll. Da Sendelicht in der Regel in ausreichender Intensität vorhanden ist, können in einer bevorzugten Ausführung α, β und γ so gewählt werden, dass die reflektierenden Flächen 24a, 24c, mit denen intensitätsschwaches Empfangslicht über die Empfangsstrahlengänge 10a, 10c auf die Lichtempfänger 11a, 11c abgebildet wird, jeweils größere Überlappungsflächen mit dem gemeinsamen Strahlengang 6 haben als die reflektierenden Flächen 24b mit dem Sendelicht aus dem Sendestrahlengang 3 in den gemeinsamen Strahlengang 6 eingekoppelt wird. Somit lässt sich ein kompakter Sensor mit einer Sendelichtquelle und zwei Lichtempfängern konstruieren, wobei das Empfangslicht in den Lichtempfängern unterschiedlich ausgewertet werden kann.

Durch den schrägen Einfall des Sendelichts auf den Reflektor 23 hätte ein Sendlichtstrahl, der mit einem kreisförmigen Strahlquerschnitt aus den Sendelichtquellen 2a, 2b, 2c austritt, nach Reflexion am Reflektor 23 einen ovalen Querschnitt. Falls nach dem Reflektor 23 ein kreisförmiger Strahlquerschnitt gewollt ist, können die Querschnitte der Sendlichtstrahlen vor der Reflexion am Reflektor 23 elliptisch geformt werden, beispielsweise durch eine anamorphotische Optik, wobei der Grad der Elliptizität abhängig vom Einstrahlwinkel δ ist.

Als Sendelichtquellen 2a, 2b, 2c werden bevorzugt Lichtemissionsdioden (LED) verwendet. Es können auch andere Lichtquellen wie beispielsweise Laser, Superlumineszenzdioden oder Oberflächenemitter (VCSEL, Vertical-Cavity Surface-Emitting Laser) oder eine Kombination der vorgenannten Lichtquellen eingesetzt werden.

Als Lichtempfänger 11a, 11b, 11c können Photodioden, APDs, SPADs, Zeilensensoren, CCDs oder vergleichbare Lichtempfänger verwendet werden.

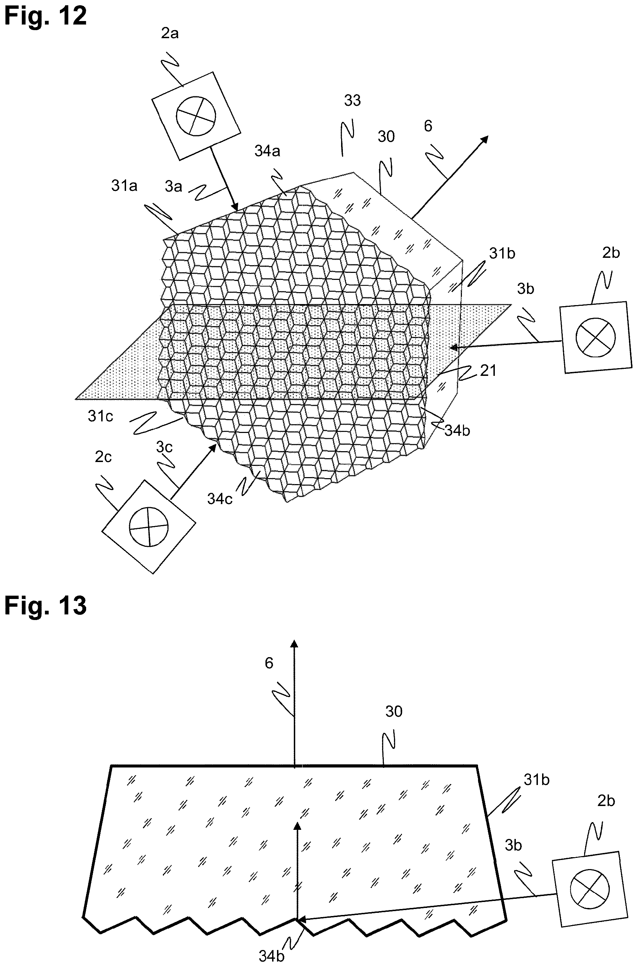

Die Dimensionen der reflektierenden Flächen sind klein im Vergleich zum Durchmesser der Sendelichtstrahlenbündel. Bevorzugt beträgt die Länge zumindest einer Kante einer reflektierenden Fläche weniger als 1:10 des Durchmessers eines Sendelichtstrahls. Rein beispielhaft findet somit im Falle der Ausführungsform gemäß Figur 6 oder Figur 12 eine Durchmischung der Sendelichtstrahlenbündel im Bereich des Objekts 9 statt. Beispielsweise erscheint die Überlagerung aus je einer roten, grünen und blauen Lichtquelle im Fernfeld weiß.

Die reflektierenden Flächen können Beschichtungen zur Optimierung der Reflexionseigenschaften aufweisen. Hierbei besteht ein Vorteil der Erfindung darin, dass eine Breitbandbeschichtung verwendet werden kann und somit die Verwendung wellenlängenspezifischer Spiegel entfallen kann, wie sie beispielsweise in einer Strahlvereinigertreppe erforderlich sind. Der Reflektor kann somit über einen breiten Wellenlängenbereich ohne spezielle Anpassung für Lichtquellen verschiedenster Wellenlängen verwendet werden. Als Beschichtungsmaterialien können bevorzugt Aluminium oder Gold verwendet werden.

Die reflektierenden Flächen können als Planoptiken ausgelegt sein oder gekrümmt (konkav, konvex oder Freiform) sein. Durch die Verwendung von gekrümmten reflektierenden Flächen kann der Reflektor zusätzlich zur Vereinigung der Sende- und/oder Empfangsstrahlengänge auch zur Strahlformung verwendet werden.

Der Reflektor wird bevorzugt als Kunststoffspritzgussteil hergestellt und in einem weiteren Prozessschritt mit einer spiegelnden Beschichtung versehen. Verschiedenste weitere Herstellungsmethoden und Materialien sind jedoch denkbar, beispielsweise ein hochgenaues additives Verfahren (z. B. 3D-Druck) mit dem die Struktur direkt erzeugt wird, Mikroätzen oder spanende Bearbeitung.
Falls der Reflektor in Kunststoff gegossen oder geprägt wird, können im gleichen Teil Elemente zur Aufnahme der Sendelichtquellen und/oder Lichtempfänger sowie strahlführende oder strahlformende Teile wie Spiegel, Parabolspiegel oder Linsen vorgesehen werden, um die Sendelichtquellen und/oder Lichtempfänger im optoelektronischen Sensor toleranzarm zu positionieren.

Da die Einfallswinkel δ der Sende- und/oder Empfangsstrahlengänge auf den Reflektor in Bezug auf die Reflektorebene vorzugsweise kleiner als 45 Grad, bevorzugt kleiner 20 Grad sind, lassen sich flache Sende- und oder Empfangsmodule realisieren. Da der Reflektor zudem eine Kantenlänge oder einen Durchmesser von bevorzugt 2 mm - 10 mm, besonders bevorzugt 1 mm - 5 mm aufweist, lässt sich ein kompakter optoelektronischer Sensor mit geringem Platzbedarf realisieren.

In Figur 12 ist ein Reflektor 33 gezeigt, der auf dem Prinzip der Totalreflexion (TIR, Total Internal Reflection) basiert. Dazu weist der Reflektor 33 einen transparenten Körper 30 auf, beispielsweise aus PMMA, PC oder Zeonex. Sendelicht 3a, 3b, 3c tritt durch die Seitenwände 31a, 31b, 31c in den Körper 30 des Reflektors 33 ein. Die Unterseite des Körpers 30 weist eine Vielzahl geneigter Flächen 34a, 34b, 34c auf. Sendelicht 3a, 3b, 3c, welches unter vorgegebenen Winkeln auf die Flächen 34a, 34b, 34c, fällt, wird durch Totalreflexion an der Grenzfläche zwischen dem Köper 30 und dem angrenzenden Medium (beispielsweise Luft) entlang der optischen Achse des Sendelichtstrahls 6 reflektiert. Die Neigungswinkel der Flächen 34a, 34b, 34c sowie die Einfallswinkel des Sendelichts 3a, 3b, 3c sind dabei abhängig von der Wellenlänge des Sendelichts 3a, 3b, 3c und dem Brechungsindex des Materials des Körpers 30.

Figur 13 zeigt einen Schnitt durch den Körper 30 des Reflektors 33 und den Strahlverlauf beispielhaft für Sendelicht 3b, welches vorzugsweise senkrecht auf die Seitenwand 31b trifft und an der Fläche 34b unter Totalreflexion entlang des gemeinsamen Strahlengangs reflektiert wird. Das Sendelicht 3b verlässt den Körper 30 durch die Oberseite des Reflektors 33, welche vorzugsweise senkrecht zur optischen Achse des Sendelichtstrahls 6 steht.

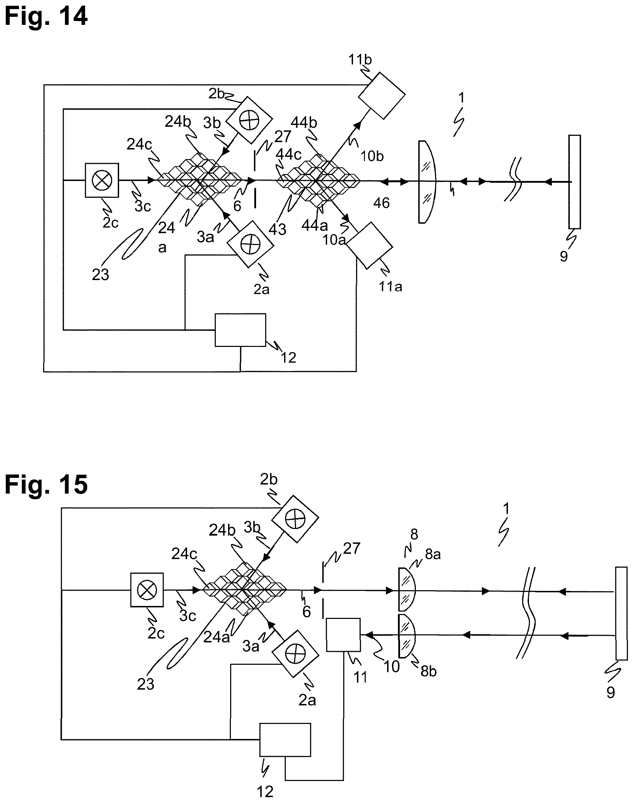

Figur 14 zeigt eine weitere mögliche Ausführungsform eines Sensors 1, welche sich an die Ausführungsform aus Figur 6 anlehnt, wobei der Strahlteiler 7 durch einen weiteren Reflektor 44 ersetzt ist. Der Reflektor 23 vereinigt drei Beleuchtungsstrahlengänge 3a, 3b, 3c wie in Figur 6 zu einem gemeinsamen Strahlgengang 6. Der weitere Reflektor 43 vereinigt diesen gemeinsamen Strahlengang 6 mit zwei Empfangsstrahlengängen 10a, 10b zu einem weiteren Strahlengang 46, so dass das vom Objekt reflektierte oder remittierte Empfangslicht mit 2 Lichtempfängern detektiert und analysiert werden kann. Diese Ausführungsform ist eine optionale Weiterbildung, die Erfindung bezieht sich vorzugsweise nur auf einen einzigen Reflektor 13 ohne einen weiteren Reflektor 44. Folglich finden vorzugsweise, anders als in Figur 14, die Reflexionen in einer gemeinsamen Reflektorebene 15, 19 statt, wobei für diese Aussage die geringe Ausdehnung der reflektierenden Flächen 14a, 14b, 24a, 24b, 24c, 34a, 34b, 34c, 44a, 44b, 44c selbst außer Betracht bleibt.

Figur 15 zeigt eine weitere mögliche Ausführungsform eines Sensors 1, welche sich an die Ausführungsform aus Figur 6 anlehnt, wobei die strahlführende Optik 8 nach dem Prinzip der Pupillenteilung für Sende- und Empfangslicht separat ausgelegt ist. Der Reflektor 23 vereinigt drei Sendestrahlengänge 3a, 3b, 3c wie in Figur 6 zu einem gemeinsamen Strahlgengang 6. Durch eine strahlformende Sendeoptik 8a wird das Sendelicht auf ein Objekt 9 geleitet. Vom Objekt 9 reflektiertes oder remittiertes Licht gelangt als Empfangslicht zurück zum Sensor 1 und wird mittels der strahlformenden Empfangsoptik 8b über einen Empfangsstrahlengang 10 auf einen Lichtempfänger 11 abgebildet.

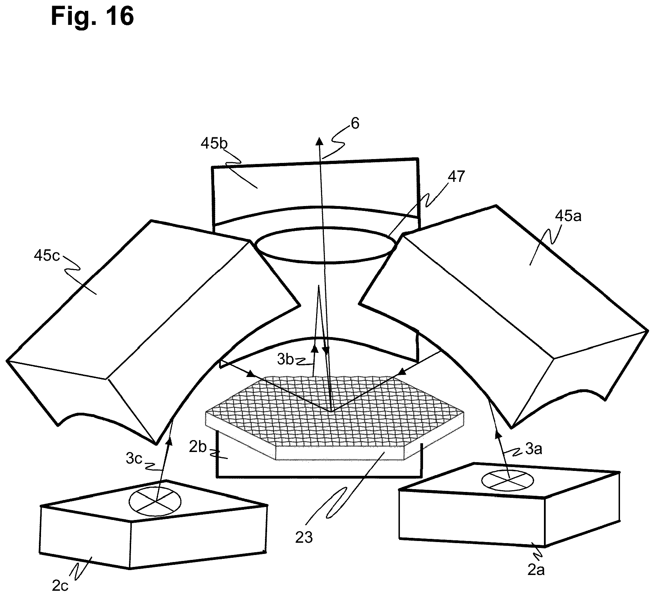

Figur 16 zeigt eine mögliche Anordnung zur Vereinigung von drei Sendestrahlengängen 3a, 3b, 3c. Von den Sendelichtquellen 2a, 2b, 2c emittiertes Sendelicht, vorzugsweise rotes, grünes, und blaues Licht, wird über Parabolspiegel 45a, 45b, 45c auf den Reflektor 23 zum Vereinigen von Sendestrahlengängen reflektiert und zu einem gemeinsamen Strahlengang 6 vereinigt. Die Parabolspiegel 45a, 45b, 45c sind vorzugsweise derart gekrümmt, dass das vereinigte Sendelicht nach dem Reflektor 23 einen kreisförmigen Strahlquerschnitt aufweist. Im gemeinsamen Strahlengang 6 kann in Lichtausbreitungsrichtung nach dem Reflektor 23 eine Blende 47 zur Begrenzung des Durchmessers des gemeinsamen Strahlengangs 6 vorgesehen sein. Zusätzlich kann im Bereich der Blende ein Diffusor (nicht gezeigt) angeordnet sein, um die Vermischung der Sendelichtstrahlenbündel zu verbessern.

Vorzugsweise können der Reflektor 23, die Parabolspiegel 45a, 45b, 45c sowie Halterungen (nicht gezeigt) der Sendelichtquellen 2a, 2b, 2c aus einem Stück gefertigt sein, um einen toleranzarmen, kompakten Aufbau zu realisieren.

## Patentansprüche

1. Optoelektronischer Sensor (1) mit wenigstens einer Sendelichtquelle (2a, 2b, 2c) zum Aussenden von Sendelicht, mit einem der Sendelichtquelle zugeordneten Sendestrahlengang (3a, 3b, 3c), mit wenigstens einem Lichtempfänger (11a, 11b, 11c) zum Empfang von reflektiertem oder remittiertem Sendelicht (10a, 10b, 10c), mit einem dem Lichtempfänger zugeordneten Empfangsstrahlengang (10a, 10b, 10c), mit einer Steuer- und Auswerteeinheit (12) und mit wenigstens einem Reflektor (23, 33, 43) zum Vereinigen von Sende- und/oder Empfangsstrahlengängen auf einen gemeinsamen Strahlengang (6),
**dadurch gekennzeichnet,**
**dass** der Reflektor (23, 33, 43) zur Vereinigung von drei Sende- und/oder Empfangsstrahlengängen (3a, 3b, 3c, 10a, 10b, 10c) ausgelegt ist, wobei der Reflektor (23, 33, 43) eine Vielzahl von reflektierenden Flächen (24, 34, 44), aufgeteilt in einen Anteil von ersten reflektierenden Flächen (24a, 34a, 44a), zweiten reflektierenden Flächen (24b, 34b, 44b) und dritten reflektierenden Flächen (24c, 34c, 44c), aufweist, welche eine Neigung zu einer senkrecht zum gemeinsamen Strahlengang (6) stehenden Reflektorebene (19) aufweisen, wobei jedem der durch den Reflektor (23, 33, 43) vereinigten Sende- und/oder Empfangsstrahlengänge (3a, 3b, 3c, 10a, 10b, 10c) ein vorgegebener Anteil (24a, 24b, 24c, 34a, 34b, 34c, 44a, 44b, 44c) der reflektierenden Flächen des Reflektors derart zugeordnet ist, dass Sendelicht, welches entlang einer optischen Achse eines Sendestrahlengangs (3a, 3b, 3c) auf den Reflektor (23, 33, 43) fällt, an dem Anteil der reflektierenden Flächen (24a, 24b, 24c, 34a, 34b, 34c, 44a, 44b, 44c) als eine Vielzahl voneinander beabstandeter Teilstrahlen entlang einer optischen Achse des gemeinsamen Strahlengangs (6) reflektiert wird, der dem Sendestrahlengang (3a, 3b, 3c) dieses Sendelichts zugeordnet ist, und/oder reflektiertes oder remittiertes Sendelicht (10a, 10b, 10c), welches entlang der optischen Achse des gemeinsamen Strahlengangs (6) auf den Reflektor (23, 33, 43) fällt, an dem Anteil der reflektierenden Flächen entlang einer optischen Achse des Empfangsstrahlengangs (10a, 10b, 10c) reflektiert wird, der diesem Empfangsstrahlengang (10a, 10b, 10c) zugeordnet ist.

2. Optoelektronischer Sensor (1) nach Anspruch 1,
wobei der Reflektor (23) drei Sendestrahlengänge (3a, 3b, 3c) oder drei Empfangsstrahlengänge (10a, 10b, 10c) vereinigt.

3. Optoelektronischer Sensor (1) nach Anspruch 1,
wobei der Reflektor (23) zwei Sendestrahlengänge (3b, 3c) und einen Empfangsstrahlengang (10) vereinigt oder einen Sendestrahlengang (3b) und zwei Empfangsstrahlengänge (10a, 10b) vereinigt.

4. Optoelektronischer Sensor (1) nach einem der Ansprüche 2 oder 3,
wobei die Neigung der reflektierenden Flächen (24) zur Reflektorebene (19) größer als 35,26 Grad und kleiner als 45 Grad ist.

5. Optoelektronischer Sensor (1) nach einem der Ansprüche 2 oder 3,
wobei die Neigung der reflektierenden Flächen (24) zur Reflektorebene (19) mindestens 37 Grad und höchstens 42 Grad beträgt.

6. Optoelektronischer Sensor (1) nach einem der Ansprüche 2 oder 3,
wobei die Neigung eines ersten Anteils (24a) der reflektierenden Flächen (24a, 24b, 24c) verschieden zur Neigung eines zweiten Anteils (24b) der reflektierenden Flächen (24a, 24b, 24c) ist.

7. Optoelektronischer Sensor (1) nach einem der Ansprüche 2 oder 3,
wobei ein erster Anteil (24a) der reflektierenden Flächen (24a, 24b, 24c), ein zweiter Anteil (24b) der reflektierenden Flächen (24a, 24b, 24c) und ein dritter Anteil (24c) der reflektierenden Flächen (24a, 24b, 24c), unterschiedliche Neigungen aufweisen.

8. Optoelektronischer Sensor (1) nach einem der Ansprüche 1 bis 7,
wobei ein Rastermaß des Reflektors (23, 33, 43) mindestens 5µm und höchstens 500 µm beträgt.

9. Optoelektronischer Sensor (1) nach einem der vorhergehenden Ansprüche zur Verwendung als Kontrastsensor oder Farbsensor.

10. Verfahren zum Vereinigen von Sende- und/oder Empfangsstrahlengängen in einem optoelektronischen Sensor (1), bei dem wenigstens eine Sendelichtquelle (2a, 2b, 2c) Sendelicht in einem Sendestrahlengang (3a, 3b, 3c) aussendet und reflektiertes oder remittiertes Sendelicht (10a, 10b, 10c) mit einem Lichtempfänger (11) in einem Empfangsstrahlengang (10a, 10b, 10c) empfangen wird, wobei drei Sende- und/oder Empfangsstrahlengänge mit wenigstens einem Reflektor (23, 33, 43) auf einen gemeinsamen Strahlengang (6) vereinigt werden, **dadurch gekennzeichnet,**
**dass** der Reflektor (23, 33, 43) zur Vereinigung von drei Sende- und/oder Empfangsstrahlengängen (3a, 3b, 3c, 10a, 10b, 10c) ausgelegt ist, wobei der Reflektor (23, 33, 43) die Sende- und/oder Empfangsstrahlengänge mittels einer Vielzahl von reflektierenden Flächen (24, 34, 44), aufgeteilt in einen Anteil von ersten reflektierenden Flächen (24a, 34a, 44a), zweiten reflektierenden Flächen (24b, 34b, 44b) und dritten reflektierenden Flächen (24c, 34c, 44c), vereinigt, welche eine Neigung zu einer senkrecht zum gemeinsamen Strahlengang (6) stehenden Reflektorebene 19) aufweisen, wobei jedem der durch den Reflektor (23, 33, 43) vereinigten Sende- und/oder Empfangsstrahlengänge (3a, 3b, 3c, 10a, 10b, 10c) ein vorgegebener Anteil (24a, 24b, 24c, 34a, 34b, 34c, 44a, 44b, 44c) der reflektierenden Flächen des Reflektors derart zugeordnet ist, dass Sendelicht, welches entlang einer optischen Achse eines Sendestrahlengangs (3a, 3b, 3c) auf den Reflektor (23, 33, 43) fällt, an dem Anteil (24a, 24b, 24c, 34a, 34b, 34c, 44a, 44b, 44c) der reflektierenden Flächen als eine Vielzahl voneinander beabstandeter Teilstrahlen entlang einer optischen Achse des gemeinsamen Strahlengangs (6) reflektiert wird, der dem Sendestrahlengang (3a, 3b, 3c) dieses Sendelichts zugeordnet ist, und/oder reflektiertes oder remittiertes Sendelicht, welches entlang der optischen Achse des gemeinsamen Strahlengangs (6) auf den Reflektor (23, 33, 43) fällt, an dem Anteil (24a, 24b, 24c, 34a, 34b, 34c, 44a, 44b, 44c) der reflektierenden Flächen entlang einer optischen Achse des Empfangsstrahlengangs (10a, 10b, 10c) reflektiert wird, der diesem Empfangsstrahlengang zugeordnet ist.

## Claims

1. Optoelectronic sensor (1) having at least one transmission light source (2a, 2b, 2c) for transmitting transmission light, having a transmission beam path (3a, 3b, 3c) assigned to the transmission light source, having at least one light receiver (11a, 11b, 11c) for receiving reflected or remitted transmission light (10a, 10b, 10c), with a reception beam path (10a, 10b, 10c) associated with the light receiver, with a control and evaluation unit (12) and with at least one reflector (23, 33, 43) for combining transmission and/or reception beam paths onto a common beam path (6), **characterized in that**
the reflector (23, 33, 43) is designed for combining three transmission and/or reception beam paths (3a, 3b, 3c, 10a, 10b, 10c), the reflector (23, 33, 43) having a plurality of reflecting surfaces (24, 34, 44) divided into a portion of first reflecting surfaces (24a, 34a, 44a), second reflecting surfaces (24b, 34b, 44b) and third reflecting surfaces (24c, 34c, 44c), which have an inclination to a reflector plane (19) being perpendicular to the common beam path (6), wherein a predetermined portion (24a, 24b, 24c, 34a, 34b, 34c, 44a, 44b, 44c) of the reflecting surfaces of the reflector is assigned to each of the transmission and/or reception beam paths (3a, 3b, 3c, 10a, 10b, 10c) combined by the reflector (23, 33, 43) in such a manner that transmission light incident on the reflector (23, 33, 43) along an optical axis of a transmission beam path (3a, 3b, 3c) is reflected at the portion of the reflecting surfaces (24a, 24b, 24c, 34a, 34b, 34c, 44a, 44b, 44c) associated with the transmission beam path (3a, 3b, 3c) of said transmission light as a plurality of spaced-apart partial beams along an optical axis of the common beam path (6), and/or reflected or remitted transmission light (10a, 10b, 10c) incident along the optical axis of the common beam path (6) on the reflector (23, 33, 43) is reflected along an optical axis of the reception beam path (10a, 10b, 10c) at the portion of the reflecting surfaces associated with said reception beam path (10a, 10b, 10c).

2. Optoelectronic sensor (1) according to claim 1,
wherein the reflector (23) combines three transmission beam paths (3a, 3b, 3c) or three reception beam paths (10a, 10b, 10c).

3. Optoelectronic sensor (1) according to claim 1
wherein the reflector (23) combines two transmission beam paths (3b, 3c) and one reception beam path (10) or combines one transmission beam path (3b) and two reception beam paths (10a, 10b).

4. Optoelectronic sensor (1) according to one of claims 2 or 3,
wherein the inclination of the reflecting surfaces (24) to the reflector plane (19) is greater than 35.26 degrees and less than 45 degrees.

5. Optoelectronic sensor (1) according to any one of claims 2 or 3,
wherein the inclination of the reflecting surfaces (24) to the reflector plane (19) is at least 37 degrees and at most 42 degrees.

6. Optoelectronic sensor (1) according to one of claims 2 or 3,
wherein the inclination of a first portion (24a) of the reflecting surfaces (24a, 24b, 24c) is different from the inclination of a second portion (24b) of the reflecting surfaces (24a, 24b, 24c).

7. Optoelectronic sensor (1) according to one of claims 2 or 3,
wherein a first portion (24a) of the reflecting surfaces (24a, 24b, 24c), a second portion (24b) of the reflecting surfaces (24a, 24b, 24c) and a third portion (24c) of the reflecting surfaces (24a, 24b, 24c), have different inclinations.

8. Optoelectronic sensor (1) according to any one of claims 1 to 7,
wherein a pitch of the reflector (23, 33, 43) is at least 5µm and at most 500 µm.

9. Optoelectronic sensor (1) according to any one of the preceding claims for use as a contrast sensor or color sensor.

10. Method for combining transmission and/or reception beam paths in an optoelectronic sensor (1), in which at least one transmission light source (2a, 2b, 2c) emits transmission light in a transmission beam path (3a, 3b, 3c) and reflected or remitted transmission light (10a, 10b, 10c) is received by a light receiver (11) in a reception beam path (10a, 10b, 10c), wherein three transmission and/or reception beam paths are combined with at least one reflector (23, 33, 43) to form a common beam path (6),
**characterized in that**
the reflector (23, 33, 43) is designed for combining three transmission and/or reception beam paths (3a, 3b, 3c, 10a, 10b, 10c), the reflector (23, 33, 43) combining the transmission and/or reception beam paths by means of a multiplicity of reflecting surfaces (24, 34, 44), divided into a proportion of first reflecting surfaces (24a, 34a, 44a), second reflecting surfaces (24b, 34b, 44b) and third reflecting (24c, 34c, 44c), which have an inclination to a reflector plane (19) perpendicular to the common beam path (6), wherein each of the emitting surfaces (24a, 34a, 44a) united by the reflector (23, 33, 43) is assigned a predetermined proportion (24a, 24b, 24c, 34a, 34b, 34c, 44a, 44b, 44c) of the reflecting surfaces of the reflector in such a manner that transmission light which is incident along an optical axis of a transmission beam path (3a, 3b, 3c) on the reflector (23, 33, 43) is reflected at the portion (24a, 24b, 24c, 34a, 34b, 34c, 44a, 44b, 44c) of the reflecting surfaces as a plurality of mutually spaced partial beams along an optical axis of the common beam path (6) which is associated with the transmission beam path (3a, 3b, 3c), 3c) of said transmission light, and/or reflected or remitted transmission light incident along said optical axis of said common beam path (6) on said reflector (23, 33, 43) is reflected at said portion (24a, 24b, 24c, 34a, 34b, 34c, 44a, 44b, 44c) of said reflecting surfaces along an optical axis of said reception beam path (10a, 10b, 10c) associated with said reception beam path.

## Revendications

1. Capteur optoélectronique (1) avec au moins une source de lumière de transmission (2a, 2b, 2c) pour transmettre la lumière de transmission, avec un trajet de faisceau de transmission (3a, 3b, 3c) associé à la source de lumière de transmission, avec au moins un récepteur de lumière (11a, 11b, 11c) pour recevoir la lumière d'émission réfléchie ou renvoyée (10a, 10b, 10c), avec un trajet de faisceau de réception (10a, 10b, 10c) associé au récepteur de lumière, avec une unité de commande et d'évaluation (12) et avec au moins un réflecteur (23, 33, 43) pour combiner des trajets de faisceau d'émission et/ou de réception sur un trajet de faisceau commun (6), **caractérisé en ce que**
le réflecteur (23, 33, 43) est conçu pour combiner trois trajets de faisceau d'émission et/ou de réception (3a, 3b, 3c, 10a, 10b, 10c), le réflecteur (23, 33, 43) ayant une pluralité des surfaces réfléchissantes (24, 34, 44) divisées en une partie de premières surfaces réfléchissantes (24a, 34a, 44a), de secondes surfaces réfléchissantes (24b, 34b, 44b) et de troisièmes surfaces réfléchissantes (24c, 34c, 44c), qui ont une inclinaison par rapport à un plan réflecteur (19) perpendiculaire au trajet de faisceau commun (6), dans lequel une partie prédéterminée (24a, 24b, 24c, 34a, 34b, 34c, 44a, 44b, 44c) des surfaces réfléchissantes du réflecteur est affecté à chacun des trajets de faisceau d'émission et/ou de réception (3a, 3b, 3c, 10a, 10b, 10c) combinés par le réflecteur (23, 33, 43) de telle manière que la lumière d'émission incidente sur le réflecteur (23, 33, 43) le long d'un axe optique d'un trajet de faisceau de transmission (3a, 3b, 3c) est réfléchi au niveau de la partie des surfaces réfléchissantes (24a, 24b, 24c, 34a, 34b, 34c, 44a, 44b, 44c) associé au trajet de faisceau de transmission (3a, 3b, 3c) de ladite lumière de transmission sous la forme d'une pluralité de faisceaux partiels espacés le long d'un axe optique du trajet de faisceau commun (6), et/ou la lumière de transmission réfléchie ou renvoyée (10a, 10b, 10c) qui incidente le long de l'axe optique du trajet de faisceau commun (6) sur le réflecteur (23, 33, 43) est réfléchi le long d'un axe optique du trajet de faisceau de réception (10a, 10b, 10c) au niveau de la partie du réflecteur des surfaces associées audit trajet de faisceau de réception (10a, 10b, 10c).

2. Capteur optoélectronique (1) selon la revendication 1,
dans lequel le réflecteur (23) combine trois trajets de faisceau d'émission (3a, 3b, 3c) ou trois trajets de faisceau de réception (10a, 10b, 10c).

3. Capteur optoélectronique (1) selon la revendication 1
dans lequel le réflecteur (23) combine deux trajets de faisceau d'émission (3b, 3c) et un trajet de faisceau de réception (10) ou combine un trajet de faisceau d'émission (3b) et deux trajets de faisceau de réception (10a, 10b).

4. Capteur optoélectronique (1) selon l'une des revendications 2 ou 3,
dans lequel l'inclinaison des surfaces réfléchissantes (24) par rapport au plan réflecteur (19) est supérieure à 35,26 degrés et inférieure à 45 degrés.

5. Capteur optoélectronique (1) selon l'une quelconque des revendications 2 ou 3, dans lequel l'inclinaison des surfaces réfléchissantes (24) par rapport au plan réflecteur (19) est d'au moins 37 degrés et d'au maximum 42 degrés.

6. Capteur optoélectronique (1) selon l'une des revendications 2 ou 3,
dans lequel l'inclinaison d'une première partie (24a) des surfaces réfléchissantes (24a, 24b, 24c) est différente de l'inclinaison d'une seconde partie (24b) des surfaces réfléchissantes (24a, 24b, 24c).

7. Capteur optoélectronique (1) selon l'une des revendications 2 ou 3,
dans lequel une première partie (24a) des surfaces réfléchissantes (24a, 24b, 24c), une seconde partie (24b) des surfaces réfléchissantes (24a, 24b, 24c) et une troisième partie (24c) des surfaces réfléchissantes (24a, 24b, 24c), ont des inclinaisons différentes.

8. Capteur optoélectronique (1) selon l'une des revendications 1 à 7,
dans lequel le pas du réflecteur (23, 33, 43) est d'au moins 5 µm et d'au maximum 500 µm.

9. Capteur optoélectronique (1) selon l'une des revendications précédentes destiné à être utilisé comme capteur de contraste ou capteur de couleur.

10. Procédé pour combiner des faisceaux d'émission et/ou de réception dans un capteur optoélectronique (1), dans lequel au moins une source de lumière d'émission (2a, 2b, 2c) émet de la lumière d'émission dans un trajet de faisceau d'émission (3a, 3b, 3c) et la lumière d'émission réfléchie ou renvoyée (10a, 10b, 10c) est reçue par un récepteur de lumière (11) dans un trajet de faisceau de réception (10a, 10b, 10c), dans lequel trois faisceaux d'émission et/ou de réception sont combinés avec au moins un réflecteur (23, 33, 43) pour former un faisceau commun (6),**caractérisé en ce que**
le réflecteur (23, 33, 43) est conçu pour combiner trois trajets de faisceau d'émission et/ou de réception (3a, 3b, 3c, 10a, 10b, 10c), le réflecteur (23, 33, 43) combinant les trajets de faisceau d'émission et/ou de réception au moyen d'une multiplicité de surfaces réfléchissantes (24, 34, 44), divisées en une proportion de premières surfaces réfléchissantes (24a, 34a, 44a), des deuxièmes surfaces réfléchissantes (24b, 34b, 44b) et des troisièmes surfaces réfléchissantes (24c, 34c, 44c), qui présentent une inclinaison par rapport à un plan de réflecteur (19) perpendiculaire au trajet de faisceau commun (6), une proportion prédéterminée (24a, 24b, 24c, 34a, 34b, 34c, 44a, 44b, 44c) des surfaces réfléchissantes étant attribuée à chacune des surfaces d'émission (24a, 34a, 44a) réunies par le réflecteur (23, 33, 43), 44c) des surfaces réfléchissantes du réflecteur de telle sorte que la lumière de transmission qui tombe le long d'un axe optique d'un trajet de faisceau de transmission (3a, 3b, 3c) sur le réflecteur (23, 33, 43) est réfléchie sur la partie (24a, 24b, 24c, 34a, 34b, 34c, 44a, 44b, 44c) des surfaces réfléchissantes sous la forme d'une pluralité de faisceaux partiels espacés les uns des autres le long d'un axe optique du trajet de faisceau commun (6) qui est associé au trajet de faisceau de transmission (3a, 3b, 3c) de la lumière de transmission, et/ou la lumière d'émission réfléchie ou renvoyée incidente le long de l'axe optique du trajet de faisceau commun (6) sur le réflecteur (23, 33, 43) est réfléchie au niveau de la partie (24a, 24b, 24c, 34a, 34b, 34c, 44a, 44b, 44c) des surfaces réfléchissantes le long d'un axe optique du trajet de faisceau de réception (10a, 10b, 10c) associé audit trajet de faisceau de réception (10a, 10b, 10c).
